# EUROPEAN PATENT APPLICATION

(11) **EP 2 355 009 A2**
(43) Date of publication of application: **10.08.2011**
(21) Application number: 10177252.3
(22) Date of filing: 17.09.2010
(51) Int. Cl.: G06K 17/00

(54) **Terminal and method for providing augmented reality**

(30) Priority: 29.01.2010 KR 20100008444
(71) Applicant: PANTECH CO., LTD., Seoul 121-792 (KR)
(72) Inventor: Hwang, Ju Hee, Ansan-si 426-210 (KR); Park, Sun Hyung, Goyang-si 412-719 (KR); Kim, Dae Yong, Seoul 157-200 (KR); Yoo, Yong gil, Goyang-si 410-380 (KR); Kang, Moon Key, Anyang-si 430-013 (KR); Hong, Jae-man, 152-848, Seoul (KR); Lee, Yong Youn, Seoul 152-774 (KR); Kong, Kyoung Jin, Seoul 1306-060 (KR); Jang, Seong Hwan, Gwangmyeong-si 423-015 (KR)
(74) Representative: Herzog, Markus

(57) **Abstract**

A first terminal shares a digital marker edited in a digital marker editing mode and an object corresponding to the edited digital marker with a second terminal using a wireless communication technology. If a digital marker is displayed on an image display unit of the first terminal, the second terminal photographs the digital marker using a camera, and synthesizes an object corresponding to the photographed digital marker with a real-time video image obtained through the camera to display a merged image as augmented reality. Then, the second terminal receives input information for changing the digital marker from a user, and transmits the received input information to the first terminal. The first terminal changes a digital marker using the input information received from the second terminal. The second terminal photographs the changed digital marker, and displays an object corresponding to the changed digital marker.

## Description

### CROSS-REFERENCE TO RELATED APPLICATION

This application claims priority from and the benefit of Korean Patent Application No. 10-2010-0008444, filed on January 29, 2010, which is hereby incorporated by reference for all purposes as if fully set forth herein.

### BACKGROUND

Field of the Invention

This disclosure relates to a terminal and method for providing augmented reality, and more particularly, a terminal and method for providing an augmented reality using a digital marker.

Discussion of the Background

In general, augmented reality is technology that merges a real world seen through a user's eyes with a virtual world. The technology may display the merged worlds as one image. The process of recognizing a marker having a predetermined pattern or a building or modeling that exists in the real world may be performed to synthesize the virtual world with the real world using the augmented reality.

In the process of recognizing a marker, an image of the real world including a marker with a white pattern on a black background is captured using a camera, and provided to a conventional terminal. The white pattern of the photographed marker may be recognized. Then, an object corresponding to the recognized pattern is synthesized with the real world to be displayed at the position of the marker. Then the object merged with the real world image may be displayed on a screen.

The marker used in the conventional augmented reality is an analog marker drawn or printed on a medium such as a paper. Therefore, only the position of an object is changed through a user operation using the conventional marker, and an analog marker drawn on a separate paper is used to change the object into a different object or to control the movement of the object in the real world.

### SUMMARY

Exemplary embodiments of the present invention provide a terminal and method for providing augmented reality, which implement a digital marker.

Additional features of the invention will be set forth in the description which follows, and in part will be apparent from the description, or may be learned by practice of the invention.

An exemplary embodiment of the present invention discloses a terminal to provide augmented reality, which includes a digital marker editing unit to edit a digital marker and to define an object corresponding to the edited digital marker; a memory unit to store the digital marker edited by the digital marker editing unit and the object corresponding to the edited digital marker; and an image display unit to display the digital marker edited by the digital marker editing unit.

An exemplary embodiment of the present invention discloses a terminal to provide augmented reality, which includes a camera unit to photograph a digital marker displayed on an image display unit of another terminal; a memory unit to store the digital marker and an object corresponding to the digital marker; to recognize the digital marker photographed by the camera unit, and to load the object corresponding to the digital marker from the memory unit; a video processing unit to synthesize the object loaded by the control unit with a real-time video image obtained through the camera unit, and an image display unit to display the synthesized object and real-time video image.

An exemplary embodiment of the present invention discloses a terminal to provide augmented reality, which includes a digital marker editing unit to edit a first digital marker and to define a first object corresponding to the edited first digital marker; a memory unit to store the first digital marker edited by the digital marker editing unit and the first object corresponding to the edited first digital marker; an image display unit to display the first digital marker edited by the digital marker editing unit; a camera unit to photograph a second digital marker displayed on an image display unit of another terminal; a control unit to recognize the second digital marker photographed by the camera unit, and to load a second object corresponding to the recognized second digital marker from the memory unit; and a video processing unit to synthesize the second object loaded by the control unit with a real-time video image obtained through the camera unit, and an image display unit to display the synthesized object and real-time video image.

An exemplary embodiment of the present invention discloses a method for providing augmented reality, which includes editing a digital marker in a digital marker editing mode and defining an object corresponding to the edited digital marker; storing the digital marker and the object in a memory unit; and displaying the digital marker on an image display unit.

An exemplary embodiment of the present invention discloses a method for providing augmented reality, which includes photographing a digital marker displayed on an image display unit of another terminal using a camera; recognizing the photographed digital marker, and loading a first object corresponding to the digital marker from a memory unit; and synthesizing the first object with a real-time video image obtained through the camera, and displaying the synthesized first object and real-time on an image display unit.

It is to be understood that both the foregoing general description and the following detailed description are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this specification, illustrate embodiments of the invention, and together with the description serve to explain the principles of the invention.

FIG. 1 is a view illustrating a digital marker according to an exemplary embodiment of this disclosure.

FIG. 2 is a block diagram schematically showing the configuration of a terminal, to provide augmented reality according to an exemplary embodiment of this disclosure.

FIG. 3 is a block diagram schematically showing the configuration of a terminal to provide augmented reality according to an exemplary embodiment of this disclosure.

FIG. 4 is a block diagram schematically showing the configuration of a terminal to provide augmented reality according to an exemplary embodiment of this disclosure.

FIG. 5 is a flowchart illustrating a method for providing augmented reality according to an exemplary embodiment of this disclosure.

FIG. 6 is a view illustrating digital markers edited according to an exemplary embodiment of this disclosure.

FIG. 7 is a flowchart illustrating a method for providing augmented reality according to an exemplary embodiment of this disclosure.

### DETAILED DESCRIPTION OF THE ILLUSTRATED EMBODIMENTS

Exemplary embodiments now will be described more fully hereinafter with reference to the accompanying drawings, in which exemplary embodiments are shown. This disclosure may, however, be embodied in many different forms and should not be construed as limited to the exemplary embodiments set forth therein. Rather, these exemplary embodiments are provided so that this disclosure will be thorough and complete, and will fully convey the scope of this disclosure to those skilled in the art. In the description, details of well-known features and techniques may be omitted to avoid unnecessarily obscuring the presented embodiments.

The terminology used herein is for the purpose of describing particular embodiments only and is not intended to be limiting of this disclosure. As used herein, the singular forms "a", "an," and "the" are intended to include the plural forms as well, unless the context clearly indicates otherwise. Furthermore, the use of the terms a, an, etc. does not denote a limitation of quantity, but rather denotes the presence of at least one of the referenced item. The use of the terms "first", "second", and the like does not imply any particular order, but they are included to identify individual elements. Moreover, the use of the terms first, second, etc. does not denote any order or importance, but rather the terms first, second, etc. are used to distinguish one element from another. It will be further understood that the terms "comprises" and/or "comprising", or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Unless otherwise defined, all terms (including technical and scientific terms) used herein have the same meaning as commonly understood by one of ordinary skill in the art. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

In the drawings, like reference numerals in the drawings denote like elements. The shape, size and regions, and the like, of the drawing may be exaggerated for clarity.

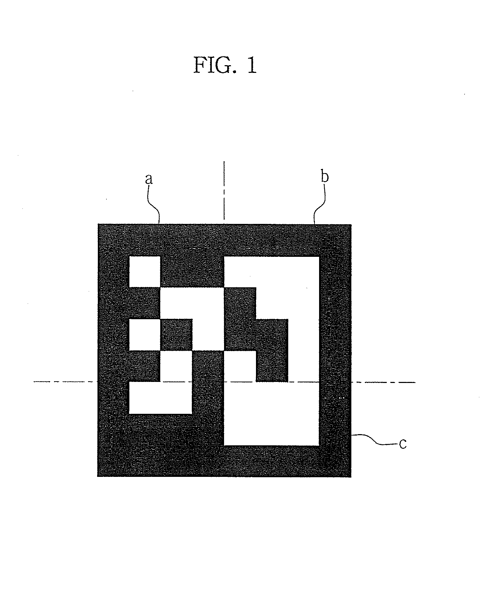

FIG. 1 is a view illustrating a digital marker according to an exemplary embodiment of this disclosure. The digital marker includes an object selection area "a" in which the kind of an object (for example, an automobile, robot, dinosaur, doll, train, airplane, animal, alphabet, number or the like) is defined, and may be changed by editing its shape, size, position, color and the like based on a user's input; an object motion selection area "b" in which the motion of the defined object (for example, in the case of a dinosaur, a left punch, right punch, left kick, right kick or the like) is defined, and may be changed by editing its shape, size, position, color and the like based on the user's input; and a background color selection area "c" in which the background color of a screen having the defined object displayed thereon is defined, and may be changed by editing its shape, size, position, color and the like based on the user's input.

Accordingly, the kind, motion, and background color of the object may be defined and also changed by editing the object selection area, the object motion selection area, and the background color selection area, respectively, of the digital marker.

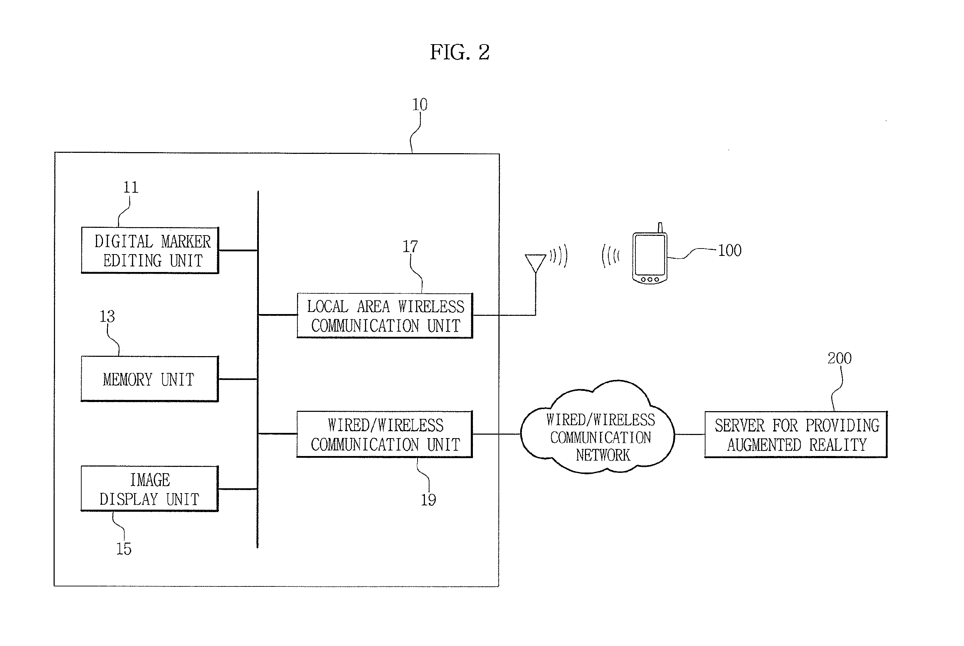

FIG. 2 is a block diagram schematically showing the configuration of a terminal to provide augmented reality according to an exemplary embodiment of this disclosure.

As shown in FIG. 2, the terminal 10 may include a digital marker editing unit 11, a memory unit 13, an image display unit 15, a local area wireless communication unit 17, and a wired/wireless communication unit 19. The digital marker editing unit 11 edits a digital marker in a digital marker editing mode and defines an object corresponding to the edited digital marker. The edit may be based on a user's input. Here, the user's input may be implemented as a key input or touch input, for example.

The image display unit 15 may display a digital marker, including the digital marker edited by the digital marker editing unit 11 using input information inputted by a user.

Also, the digital marker editing unit 11 may change the digital marker displayed on the image display unit 15 using input information (input information for editing the digital marker) transmitted from another terminal 100 and received at the local area wireless communication unit 17.

Also, the digital marker editing unit 11 may change the digital marker displayed on the image display unit 15 using input information (input information for editing the digital marker) transmitted from a server 200 for providing augmented reality, and connected to the terminal 10 through the wired/wireless communication unit 19. Although not shown, the other terminal 100 may communicate with the terminal 10 through the wired/wireless communication unit 19. Although not shown, the server 200 may communicate with the terminal 10 through the local area wireless communication unit 17.

The memory unit 13 stores the digital marker edited by the digital marker editing unit 11 and the object corresponding to the edited digital marker.

The memory unit 13 may sequentially store digital markers edited by the digital marker editing unit 11 so that motions of the object can be displayed through continuous and sequential changes such that a user observes the object in motion.

The image display unit 15 displays digital markers edited by the digital marker editing unit 11 and may display a digital marker selected by the user among the digital markers stored in the memory unit 13.

The local area wireless communication unit 17 transmits a digital marker selected by the user to the other terminal 100 using a local area wireless communication technology. The local area wireless communication unit 17 may also transmit an object corresponding to the selected digital marker to the other terminal 100. The transmitted digital marker may be selected by the user among the digital markers that are edited by the digital marker editing unit 11 and stored in the memory unit 13.

As described above, a digital marker edited by a user and an object corresponding to the edited digital marker may be transmitted to the other terminal 100 using the local area wireless communication technology, so that the terminal 10 for providing augmented reality can share the digital marker and the object corresponding to the digital marker with the other terminal 100.

The local area wireless communication unit 17 may also receive input information for changing a digital marker from the other terminal 100, and sends the received input information to the digital marker editing unit 11.

The wired/wireless communication unit 19 transmits a digital marker selected by the user to the server 200 for providing augmented reality through a wired/wireless communication network so that the selected digital maker is registered in the server 200 for providing augmented reality. The wired/wireless communication unit 19 may also transmit the object corresponding to the transmitted digital marker to the server 200 for providing augmented reality through a wired/wireless communication network so that the object corresponding to the transmitted digital marker is registered in the server 200 for providing augmented reality. Here, the digital marker may be selected by the user among the digital markers that are edited by the digital marker editing unit 11 and stored in the memory unit 13. For the purposes of this application, the term "wired/wireless communication" refers to communication that is performed wirelessly and/or through physical wires. The wired/wireless communication may be capable of communicating using both wired and wireless technology, but also includes communication that is performed only wirelessly, or only through wires. Similarly, a wired/wireless communication unit may be capable of transmitting/receiving information using both wired and wireless technology, only wirelessly, or only through wires.

As described above, a digital marker edited by a user and an object corresponding to the edited digital marker may be transmitted to the server 200 for providing augmented reality and registered in the server 200 for providing augmented reality, so that the terminal 10 can share the digital marker and the object corresponding to the digital marker with the server 200 for providing augmented reality, and any other devices that may communicate with the server 200.

The wired/wireless communication unit 19 may also receive input information for changing a digital marker from the server 200 for providing augmented reality, and sends the received input information to the digital marker editing unit 11.

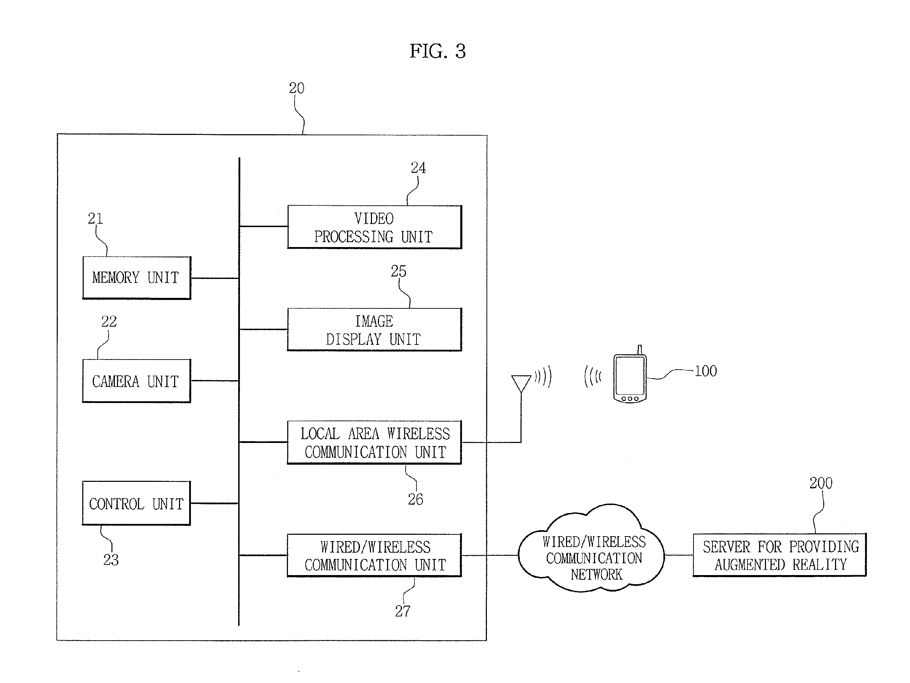

FIG. 3 is a block diagram schematically showing the configuration of a terminal to provide augmented reality according to an exemplary embodiment of this disclosure.

As shown in FIG. 3, the terminal 20 may include a memory unit 21, a camera unit 22, a control unit 23, a video processing unit 24, an image display unit 25, a local area wireless communication unit 26, and a wired/wireless communication unit 27. In FIG. 3, a memory unit 21 stores digital markers and objects corresponding to the respective digital markers. That is, the digital marker and the objects corresponding to the respective digital markers are digital markers transmitted through the local area wireless communication unit 26 and objects respectively corresponding to the transmitted digital markers, and digital markers downloaded from the server 200 for providing augmented reality through the wired/wireless communication unit 27 and objects respectively corresponding to the downloaded digital markers.

The camera unit 22 may photograph a digital marker displayed on an image display unit of the other terminal 100.

The control unit 23 recognizes the digital marker photographed by the camera unit 22, and loads an object corresponding to the recognized digital marker from the memory unit 21 to send the object corresponding to the recognized digital marker to the video processing unit 24.

The video processing unit 24 synthesizes the object sent from the control unit 23 with a real-time video image obtained through the camera unit 22, so that they are displayed on an image display unit 25 in a merged format, such as overlapping with each other.

The local area wireless communication unit 26 receives a digital marker and an object corresponding to the digital marker transmitted from the other terminal 100 using the local area wireless communication technology and may store them in the memory unit 21. In order to change a digital marker displayed on the image display unit of the other terminal 100, the local area wireless communication unit 26 may transmit input information inputted by a user of the terminal 20 to the other terminal 100 using the local area wireless communication technology.

The wired/wireless communication unit 27 downloads a registered digital marker and an object corresponding to the registered digital marker from the server 200 for providing augmented reality through the wired/wireless communication network to store the registered digital marker and the object corresponding to the digital marker in the memory unit 21. The registered digital marker and the corresponding object may be registered by the terminal 100. In order to change a digital marker displayed on the image display unit of the other terminal 100, the wired/wireless communication unit 27 may transmit the input information inputted by the user of the terminal 20 to the other terminal 100 through the server 200 for providing augmented reality if the terminal 100 is connected to the server 200 for providing augmented reality.

Although not shown, the other terminal 100 may communicate with the terminal 20 through the wired/wireless communication unit 27. Although not shown, the server 200 may communicate with the terminal 20 through the local area wireless communication unit 26.

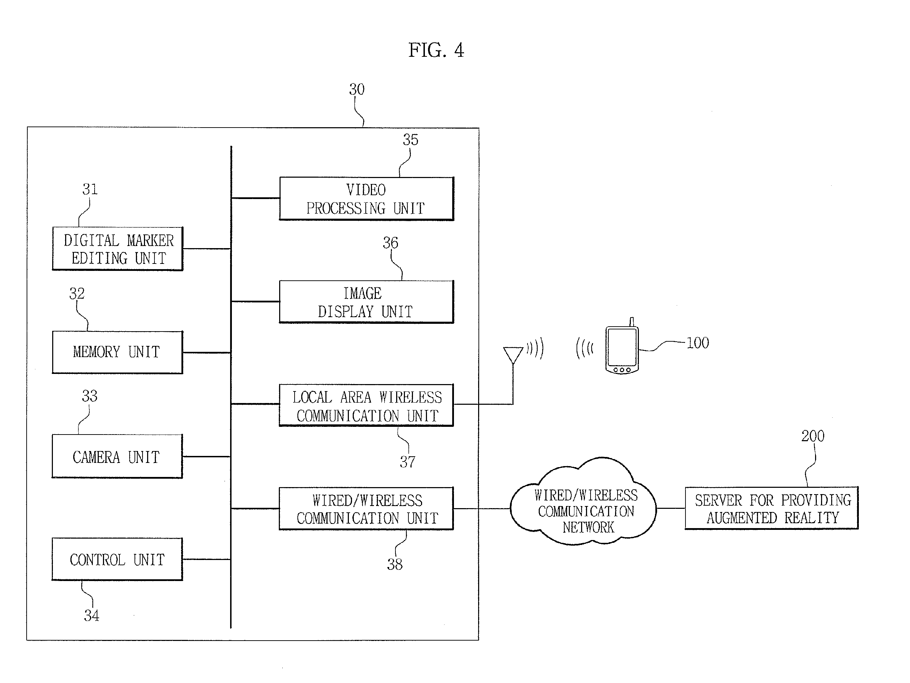

FIG. 4 is a block diagram schematically showing the configuration of a terminal to provide augmented reality according to an exemplary embodiment of this disclosure.

As shown in FIG. 4, the terminal 30 may include a digital marker editing unit 31, a memory unit 32, a camera unit 33, a control unit 34, a video processing unit 35, an image display unit 36, a local area wireless communication unit 37, and a wired/wireless communication unit 38. In FIG. 4, a digital marker editing unit 31 edits a digital marker in a digital marker editing mode and defines an object corresponding to the edited digital marker. The editing and defining may be based on a user's input.

The image display unit 36 may display the digital marker, including the digital marker edited by the digital marker editing unit 31 using input information inputted by a user. The digital marker editing unit 31 may change the digital marker displayed on the image display unit 36 using input information for changing a digital marker transmitted from the other terminal 100 through the local area wireless communication unit 37, and may change the digital marker displayed on the image display unit 36 using input information for changing a digital marker transmitted from the server 200 for providing augmented reality through the wired/wireless communication unit 38.

The memory unit 32 stores a digital marker edited by the digital marker editing unit 31 and an object corresponding to the edited digital marker, a digital marker transmitted from the other terminal 100 through the local area wireless communication unit 37 and an object corresponding to the transmitted digital marker, and a digital marker downloaded from the server 200 for providing augmented reality through the wired/wireless communication unit 38 and an object corresponding to the downloaded digital marker.

The image display unit 36 displays a digital marker edited by the digital marker editing unit 31, and may display a digital marker selected by the user among the digital markers stored in the memory unit 32.

The camera unit 33 may photograph a digital marker displayed on an image display unit of the other terminal 100.

The control unit 34 recognizes the digital marker photographed by the camera unit 33, and loads an object corresponding to the recognized digital marker from the memory unit 32 to send the object corresponding to the recognized digital marker to a video processing unit 35.

The video processing unit 35 synthesizes the object sent from the control unit 34 with a real-time video image obtained through the camera unit 33 so that they are displayed on the image display unit 35 in a merged format, such as overlapping with each other.

The local area wireless communication unit 37 transmits a digital marker selected by the user to the other terminal 100 using the local area wireless communication technology. The local area wireless communication unit 37 may also transmit an object corresponding to the selected digital marker to the other terminal 100. The transmitted digital marker may be selected by the user among the digital markers that are edited by the digital marker editing unit 31 and stored in the memory unit 32. The local area wireless communication unit 37 may receive a digital marker and an object corresponding to the digital marker from the other terminal 100 using the local area wireless communication technology and store them in the memory unit 32, and may receive input information from the other terminal 100 for changing the digital marker displayed on the image display unit 36 and may send the received input information to the digital marker editing unit 31. In order to change the digital marker displayed on the image display unit of the other terminal 100, the local area wireless communication unit 37 transmits input information, which may be inputted by the user, to the other terminal 100 using the local area wireless communication technology.

The wired/wireless communication unit 38 transmits a digital marker selected by the user to the server 200 for providing augmented reality through the wired/wireless communication network. The wired/wireless communication unit 38 may also transmit the object corresponding to the transmitted digital marker to the server 200 for providing augmented reality through a wired/wireless communication network so that the obj ect corresponding to the transmitted digital marker is registered in the server 200 for providing augmented reality. Here, the digital marker may be selected by the user among the digital markers that are edited by the digital marker editing unit 31 and stored in the memory unit 32. The wired/wireless communication unit 38 downloads a registered digital marker and an object corresponding to the registered digital marker from the server 200 for providing augmented reality to store them in the memory unit 32. The wired/wireless communication unit 38 receives input information for changing the digital marker displayed on the image display unit 36 through the server 200 for providing augmented reality, and sends the received input information to the digital marker editing unit 31. In order to change the digital marker displayed on the image display unit of the other terminal 100, the wired/wireless communication unit 38 transmits input information, which may be inputted by the user, to the other terminal 100 through the server 200 for providing augmented reality if the terminal 100 is connected to the server 200 for providing augmented reality.

Although not shown, the other terminal 100 may communicate with the terminal 30 through the wired/wireless communication unit 38. Although not shown, the server 200 may communicate with the terminal 30 through the local area wireless communication unit 37.

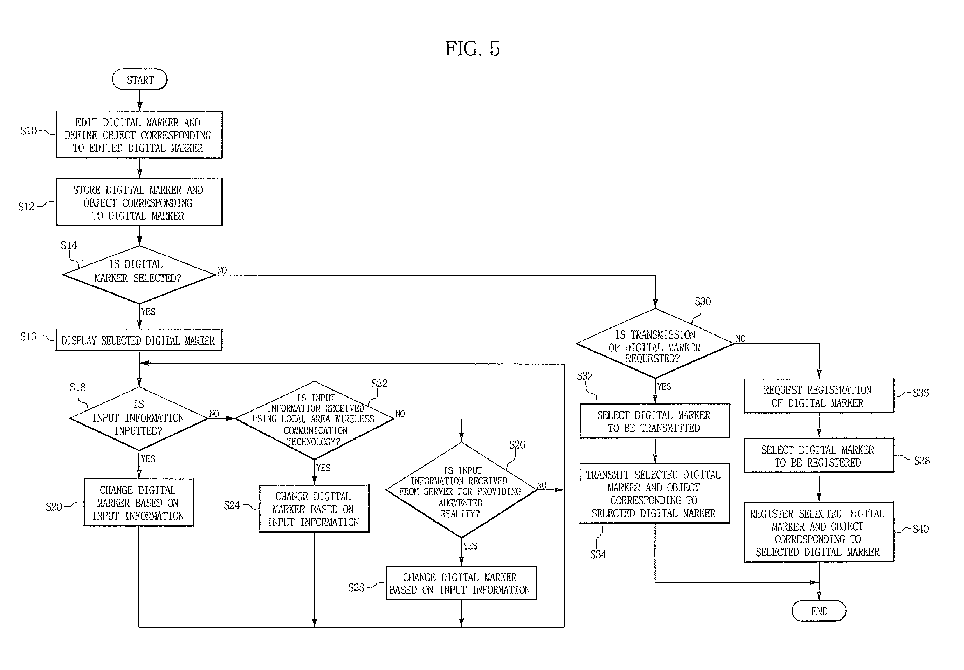

FIG. 5 is a flowchart illustrating a method for providing augmented reality according to an exemplary embodiment of this disclosure. For clarity and ease of understanding, and without being limited thereto, FIG. 5 will be described with reference to FIG. 2.

The terminal 10 edits a digital marker in a digital marker editing mode and defines an object corresponding to the edited digital marker (S10). The editing and defining may be based on a user's input.

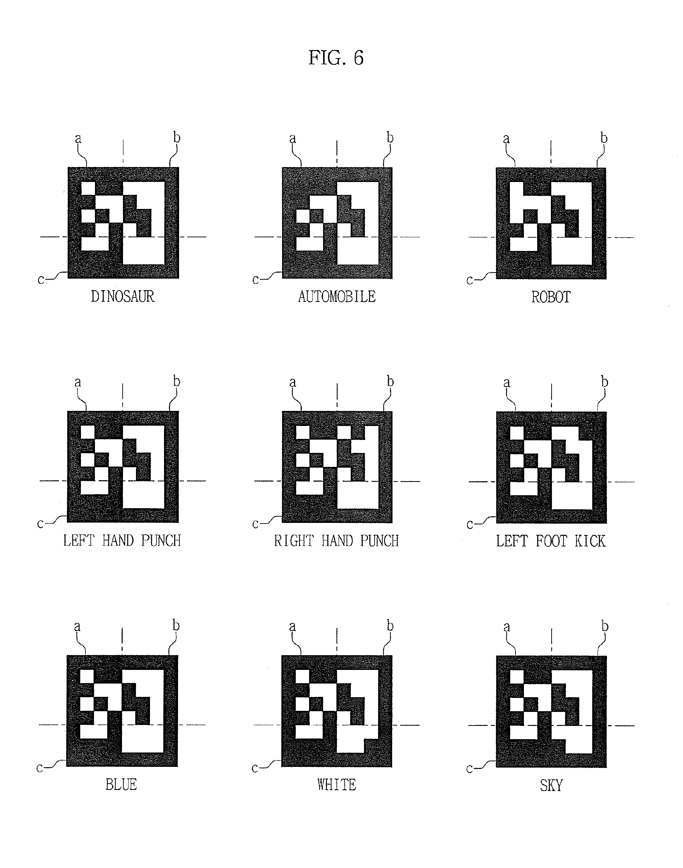

In the aforementioned operation S10, as illustrated in FIG. 6, a user may edit an object selection area "a" of a digital marker to define the kind of an object corresponding to the digital marker. The user also may edit an object motion selection area "b" to define the motion of the corresponding object. The user also may edit a background color selection area "c" to define the background color of a screen on which the corresponding object is displayed.

The digital marker edited at the operation S10 and the object corresponding to the edited digital marker are stored in the memory unit 13 (S12).

If a digital marker stored in the memory unit 13 is selected (S14), the terminal 10 displays the selected digital marker on the image display unit 15 (S16). Then, if input information for changing the digital marker is inputted (S 18), the terminal 10 changes the digital marker displayed on the image display unit 15 based on the input information (S20).

If input information for changing the digital marker is not inputted at S 18, and instead input information for changing the digital marker displayed on the image display unit 15 is received from the other terminal 100 through the local area wireless communication unit 17 (S22), the terminal 10 changes the digital marker displayed on the image display unit 15 using the input information received from the other terminal 100 through the local area wireless communication unit 17 (S24).

If input information for changing the digital marker is not inputted at S 18, and if input information for changing the digital marker displayed on the image display unit 15 is not received from the other terminal 100 through the local area wireless communication unit 17 at S22, and instead input information for changing the digital marker displayed on the image display unit 15 is received from the server 200 for providing augmented reality through the wired/wireless communication unit 19 (S26), the terminal 10 changes the digital marker displayed on the image display unit 15 using the input information received from the server 200 for providing augmented reality through the wired/wireless communication unit 19 (S28).

If a digital marker is not selected at S 14, and instead the transmission of the digital marker using the local area wireless communication technology is requested (S30), a digital marker to be transmitted using the local area wireless communication technology is selected among the digital markers stored in the memory unit 13 (S32), and the selected digital marker and an object corresponding to the selected digital marker are transmitted to the other terminal 100 through the local area wireless communication unit 17 (S34). Alternatively, the other terminal 100 may pre-store the objects corresponding to digital markers or may retrieve the objects from another source, such as the server 200 for providing augmented reality, in which case the selected digital marker may be transmitted to the other terminal 100 without transmitting the corresponding object.

The other terminal 100 that receives the digital marker and the object corresponding to the digital marker, transmitted from the terminal 10 using the local area wireless communication technology at the aforementioned operation S34, stores the digital marker and the object corresponding to the digital marker in its memory unit.

If a digital marker is not selected at S 14, and transmission of the digital marker using the local area wireless communication technology is not requested at S30, the registration of a digital marker in the server 200 for providing augmented reality may be requested (S36). In this case, a digital marker to be registered in the server 200 for providing augmented reality is selected among the digital markers stored in the memory unit 13 (S38), and the selected digital marker and an object corresponding to the selected digital marker are transmitted to the server 200 for providing augmented reality through the wired/wireless communication unit 19 so that the selected digital marker and the object corresponding to the selected digital maker are registered in the server 200 for providing augmented reality (S40). Alternatively, the server 200 may pre-store the objects corresponding to digital markers or may retrieve the objects from another source, in which case the digital marker to be registered may be transmitted to the server 200 without transmitting the corresponding object.

Through the aforementioned operation S40, if the terminal 10 for registers an edited digital marker of its own and an object corresponding to the edited digital marker to the server 200 for providing augmented reality, the other terminal 100 may connect to the server 200 for providing augmented reality through the wired/wireless communication network and may download the digital marker registered in the server 200 for providing augmented reality and an object corresponding to the registered digital marker, so that they can be stored in the memory unit of the other terminal 100.

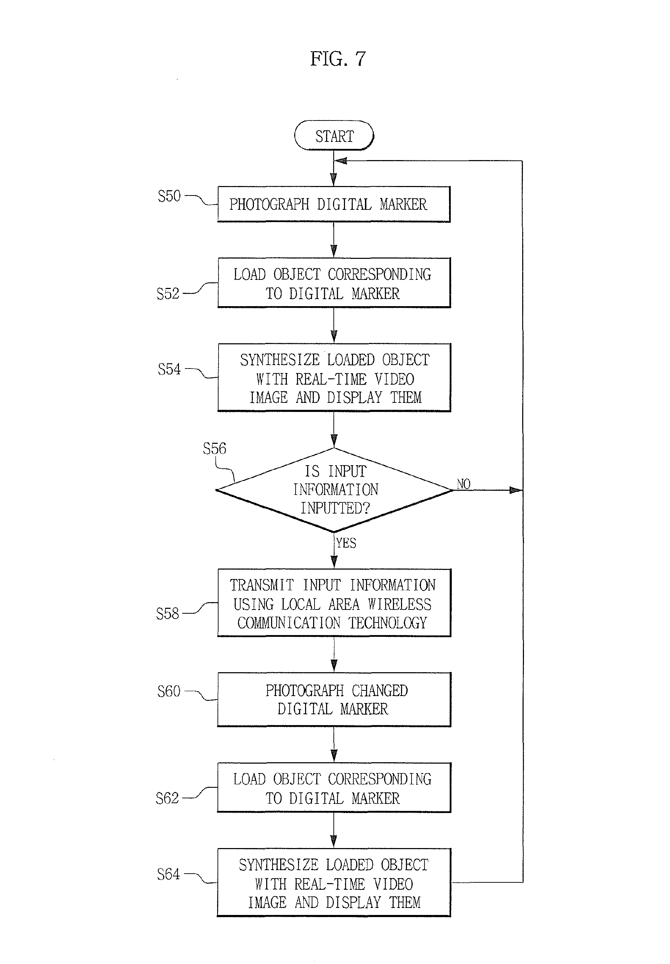

FIG. 7 is a flowchart illustrating a method for providing augmented reality according to an exemplary embodiment of this disclosure. For clarity and ease of understanding, and without being limited thereto, FIG. 7 will be described with reference to FIG. 3.

If a digital marker displayed on the image display unit of the other terminal 100 is photographed using the camera unit 22 of the terminal 20 (S50), the control unit 23 recognizes the photographed digital marker, and loads an object corresponding to the recognized digital marker from the memory unit 21 (S52).

The video processing unit 24 synthesizes the object loaded at the aforementioned operation S52 with a real-time video image obtained through the camera unit 22, and displays them on the image display unit 25 (S54). The display of the object and the real-time video image may be in a merged format, such as overlapping with each other.

If input information for changing the digital marker displayed on the image display unit 25 or the image display unit of the other terminal 100 is inputted by a user (S56), the terminal 20 transmits the input information inputted by the user to the other terminal 100 through the local area wireless communication unit 26 (S58).

The other terminal 100 that receives the input information for changing the digital marker displayed on its image display unit, transmitted from the terminal 20 at the aforementioned operation S58, changes the digital marker displayed on its image display unit using the input information.

The terminal 20 photographs the digital marker changed on the image display unit of the other terminal 100 (S60), and newly recognizes the photographed digital marker. Then, the terminal 20 loads an object corresponding to the newly recognized digital marker from the memory unit 21 (S62).

The video processing unit 24 synthesizes the object loaded from the memory unit 21 at the aforementioned operation S62 with a real-time video image obtained through the camera unit 22, and displays them on the image display unit 25 (S64). The display of the object and the real-time video image may be in a merged format, such as overlapping with each other.

For example, when the object selection area "a" of a digital marker displayed on the image display unit of the other terminal 100 is changed according to input information transmitted from the terminal 20 to the other terminal 100, the corresponding obj ect is changed, for example, from a dinosaur to an automobile and then displayed on the image display unit of the other terminal 100. When the object motion selection area "b" of the digital marker is changed, a left punch of the dinosaur displayed on the image display unit of the other terminal 100is moved. When the background color selection area "c" of the digital marker is changed, the color of a background having the object displayed thereon is changed, for example, from blue to white. If the terminal 20 then photographs the changed digital marker, recognizes the photographed digital marker, and loads an object corresponding to the newly recognized digital marker from the memory unit 21, then the terminal 20's video processing unit 24 synthesizes the loaded object with a real-time video image obtained through the camera unit 22, and displays them on the image display unit 25.

As described above, the terminal and method for providing augmented reality, disclosed herein, may be applied to various services. As one example, a first terminal having an image display unit, such as a mobile phone, cellular phone, personal computer (PC), portable media player (PMP) or mobile internet device (MID), defines an object corresponding to a digital marker edited in a digital marker editing mode as an automobile, robot, dinosaur, doll, train, airplane, animal, Korean alphabet, English alphabet, number or the like. The first terminal shares information corresponding to the edited digital marker and the object corresponding to the edited digital marker with a second terminal having a camera, and the first terminal displays the digital marker on its image display unit. Then, the second terminal photographs the digital marker using the camera and recognizes the photographed digital marker from the shared information. Thus, the second terminal synthesizes an object (an automobile, robot, dinosaur, doll, train, airplane, animal, Korean alphabet, English alphabet, number or the like) corresponding to the recognized digital marker with a real-time video image obtained through the camera, and displays them on the second terminal's image display unit. Then, the second terminal changes the digital marker through a key (or touch screen) operation (including a remote operation using the local area wireless communication technology), and the like. Accordingly, a user can display an object in motion by editing the digital markers. Similarly, if the object represents a number, or letter or character in an alphabet, like the Korean alphabet, English alphabet, or the like, users can display and edit those objects.

As another example, a first terminal defines an object corresponding to a digital marker edited in a digital marker editing mode as clothes, accessories or the like. After the first terminal shares information corresponding to the edited digital marker and the object corresponding to the edited digital marker with a second terminal having a camera, and the first terminal displays the digital marker on an image display unit thereof in the state that its image display unit is positioned at a certain position of the user's body. Then, the second terminal photographs the digital marker using the camera and recognizes the photographed digital marker from the shared information. Thus, the second terminal synthesizes an object (clothes, accessories or the like) corresponding to the recognized digital marker with a real-time video image obtained through the camera, and displays them on its image display unit. Accordingly, a user can virtually try on clothes, accessories and the like. Alternatively, the second terminal changes the digital marker through a key (or touch screen) operation (including a remote operation using the local area wireless communication technology), and the like, thereby changing the clothes, accessories and the like, which are virtually tried on by the user.

As still another example, a first terminal defines an object corresponding to a digital marker edited in a digital marker editing mode as a message such as "on vacation," "at table" or "in meeting," and the first terminal shares information corresponding to the edited digital marker and the object corresponding to the edited digital marker with a second terminal having a camera. Then, if a user using the first terminal leaves its place in the state that a digital marker is displayed on an image display unit of the first terminal, the second terminal photographs the digital marker using the camera, and recognizes the photographed digital marker from the shared information. Thus, a message ("on vacation," "at table," "in meeting" or the like) corresponding to the recognized digital marker can be checked. After the user using the first terminal uses a third terminal to be connected to the server 200 for providing augmented reality through the wired/wireless communication network, the digital marker displayed on the display unit of the first terminal may be changed through the server 200 for providing augmented reality.

As still another example, a first terminal defines an object corresponding to a digital marker edited in a digital marker editing mode as a question of mathematics, English, Korean, society, science or the like. After the first terminal shares information corresponding to the edited digital marker and the object corresponding to the edited digital marker with a second terminal having a camera, the first terminal displays the digital marker on an image display unit thereof. Then, the second terminal recognizes a digital marker photographed using the camera from the shared information, and displays a question corresponding to the recognized digital marker on its image display unit. If an answer for the question is inputted by changing the digital marker through a key (or touch screen) operation (including a remote operation using the local area wireless communication technology), and the like, the first terminal can provide a feedback based on the answer inputted by the second terminal.

As still another example, a first terminal defines an object corresponding to a digital marker edited in a digital marker editing mode as price, and the first terminal shares information corresponding to the edited digital marker and the object corresponding to the edited digital marker with a second terminal having a camera. Then, if an auction bidder displays a digital marker correspond to its own desired price for an article on an image display unit of the first terminal, an auctioneer checks price corresponding to a digital marker photographed using the camera of the second terminal, and allows the article to be given to the auction bidder that proposes the lowest (or highest) price.

As still another example, a digital marker in place of a waiting number ticket is transmitted to a customer's mobile phone, so that a bank employee can check a customer with the next order using the augmented reality. Also, a unique digital marker is provided to each customer, so that a bank employee can simply check information (loan, deposit, card issuing and the like) on a customer using the augmented reality.

As still another example, a first terminal defines an object corresponding to a digital marker edited in a digital marker editing mode as a text or emoticon to be used for a proposal of marriage. After the first terminal shares information corresponding to the edited digital marker and the object corresponding to the edited digital marker with a second terminal having a camera, it displays the digital marker on an image display unit thereof. Then, the second terminal synthesizes a text or emoticon corresponding to a digital marker photographed using the camera with a real-time video image obtained through the camera, and displays them on its image display unit. Thus, the second terminal changes the digital marker through a key (or touch screen) operation (including a remote operation using the local area wireless communication technology), and the like, and displays a text or emoticon corresponding to the changed digital marker on its image display unit. Accordingly, a user can make a proposal of marriage and receive a response via terminals.

As still another example, a first terminal defines an object corresponding to a digital marker edited in a digital marker editing mode as a name card, and the first terminal shares information corresponding to the edited digital marker and the object corresponding to the edited digital marker with a second terminal having a camera. Then, if the digital marker is displayed on an image display unit of the first terminal, the second terminal displays a name card corresponding to a digital marker photographed using the camera on an image display unit thereof. Accordingly, a user can show its own information to a partner.

As still another example, after two mobile phones are positioned to face each other at both sides of a main passage into the house, a first terminal displays a digital marker on an image display unit thereof, and a second terminal continuously photographs the digital marker. Then, the second terminal synthesizes a virtual line corresponding to the photographed digital marker with a real-time video image obtained through the camera, and displays them on an image display unit thereof. Accordingly, if the virtual line is cut due to the entry of a stranger, the second terminal can relay that information via a communication unit to a security server, for example, and an alarm sound can be sounded.

As still another example, a first terminal defines an object corresponding to a digital marker edited in a digital marker editing mode as a motion of golf, Taekweondo (Korean martial art), tennis, martial art, bowling or the like. After the first terminal shares information corresponding to the edited digital marker and the object corresponding to the edited digital marker with a second terminal having a camera, it displays the digital marker on an image display unit thereof. Then, the second terminal synthesizes a motion corresponding to a digital marker photographed using the camera with a real-time video image obtained through the camera, and displays them on an image display unit thereof. Accordingly, the second terminal changes the digital marker through a key (or touch screen) operation (including a remote operation using the local area wireless communication technology), and the like, so that a user can watch motions of sports while changing them in a predetermined order.

As still another example, a first terminal defines an object corresponding to a digital marker edited in a digital marker editing mode as an object necessary for education (e.g., Cheomseongdae, Dabotap, Seokgatap (Korean towers), Eiffel Tower, Sphinx, Pyramid or the like), and shares information corresponding to the edited digital marker and the object corresponding to the edited digital marker with a second terminal having a camera. Then, if the first terminal displays the digital marker on an image display unit thereof, the second terminal displays an object corresponding to a digital marker photographed using the camera on an image display unit thereof. Accordingly, when a teacher explains a specified object during education, the second terminal changes the object to be explained through a key (or touch screen) operation (including a remote operation using the local area wireless communication technology), and the like, so that the teacher can give a lecture while visually showing the object to students.

As described above, a digital marker edited based on the service to be provided and an object corresponding to the digital marker can be transacted and distributed through an on-line server for providing augmented reality.

The terminal and method for providing the augmented reality is not limited to the aforementioned embodiments but may be modified within the scope of the technical spirit disclosed herein.

While the present invention has been described in connection with certain exemplary embodiments, it is to be understood that the invention is not limited to the disclosed embodiments, but, on the contrary, is intended to cover various modifications and equivalent arrangements included within the spirit and scope of the appended claims, and equivalents thereof.
A first terminal shares a digital marker edited in a digital marker editing mode and an object corresponding to the edited digital marker with a second terminal using a wireless communication technology. If a digital marker is displayed on an image display unit of the first terminal, the second terminal photographs the digital marker using a camera, and synthesizes an object corresponding to the photographed digital marker with a real-time video image obtained through the camera to display a merged image as augmented reality. Then, the second terminal receives input information for changing the digital marker from a user, and transmits the received input information to the first terminal. The first terminal changes a digital marker using the input information received from the second terminal. The second terminal photographs the changed digital marker, and displays an object corresponding to the changed digital marker.

## Claims

1. A terminal to provide augmented reality, comprising:
a digital marker editing unit to edit a digital marker and to define an object corresponding to the edited digital marker;
a memory unit to store the digital marker edited by the digital marker editing unit and the object corresponding to the edited digital marker; and
an image display unit to display the digital marker edited by the digital marker editing unit.

2. The terminal according to claim 1, wherein the digital marker comprises:
an editable object selection area to define a kind of the object; and
an editable object motion selection area to define a motion of the object;
and, preferably, further comprises a background color selection area to define a background color of a screen on which the object is displayed.

3. The terminal according to claim 1 or 2, further comprising:
a local area wireless communication unit to transmit the digital marker and the object corresponding to the digital marker to another terminal using a local area wireless communication technology, to receive input information to change the digital marker from the other terminal, and to send the received input information to the digital marker editing unit, and, preferably, the digital marker editing unit changing the digital marker displayed on the image display unit using the received input information.

4. The terminal according to any of claims 1 to 3, further comprising:
a wired/wireless communication unit to transmit the digital marker and the object corresponding to the digital marker to a server through a wired/wireless communication network, to receive input information to change the digital marker from the server, and to send the received input information to the digital marker editing unit.

5. A terminal to provide augmented reality, comprising:
a camera unit to photograph a digital marker displayed on an image display unit of another terminal;
a memory unit to store the digital marker and an object corresponding to the digital marker;
a control unit to recognize the digital marker photographed by the camera unit, and to load the obj ect corresponding to the digital marker from the memory unit;
a video processing unit to synthesize the object loaded by the control unit with a real-time video image obtained through the camera unit; and
an image display unit to display the synthesized object and real-time video image.

6. The terminal according to claim 5, further comprising:
a local area wireless communication unit to receive the digital marker and the object corresponding to the digital marker from the other terminal, and to transmit input information to the other terminal to change the digital marker displayed on the image display unit of the other terminal.

7. The terminal according to claim 5 and 6, further comprising:
a wired/wireless communication unit to download the digital marker and the object corresponding to the registered digital marker from a server, and to transmit input information to the server to change the digital marker displayed on the image display unit of the other terminal.

8. A terminal to provide augmented reality, comprising:
a digital marker editing unit to edit a first digital marker and to define a first object corresponding to the edited first digital marker;
a memory unit to store the first digital marker edited by the digital marker editing unit and the first object corresponding to the edited first digital marker;
an image display unit to display the first digital marker edited by the digital marker editing unit;
a camera unit to photograph a second digital marker displayed on an image display unit of another terminal;
a control unit to recognize the second digital marker photographed by the camera unit,
and to load a second object corresponding to the recognized second digital marker from the memory unit;
a video processing unit to synthesize the second object loaded by the control unit with a real-time video image obtained through the camera unit; and
an image display unit to display the synthesized object and real-time video image.

9. The terminal according to claim 8, further comprising:
a local area wireless communication unit to transmit the first digital marker and the first object corresponding to the first digital marker to the other terminal, to receive the second digital marker and the second object corresponding to the second digital marker from the other terminal to store the received second digital marker and the second object corresponding to the second digital maker to the memory unit, to receive input information to change the first digital marker from the other terminal, and to transmit input information to the other terminal to change the second digital marker displayed on the image display unit of the other terminal.

10. The terminal according to claim 8 or 9, further comprising:
a wired/wireless communication unit to transmit the first digital marker and the first object corresponding to the first digital marker to a server, to download the second digital marker and the second object corresponding to the second digital marker from the server to store the second digital marker and the second object corresponding to the second digital maker in the memory unit, to receive input information to change the first digital marker from the server, and to transmit input information to the server to change the second digital marker displayed on the image display unit of the other terminal.

11. The terminal according to any of claims 8 to 10, wherein the digital marker editing unit edits the first digital marker according to a user's input comprising a key input or a touch input.

12. A method for providing augmented reality, comprising:
editing a digital marker in a digital marker editing mode and defining an object corresponding to the edited digital marker;
storing the digital marker and the object in a memory unit; and
displaying the digital marker on an image display unit.

13. The method according to claim 12, further comprising:
receiving input information for changing the digital marker displayed on the image display unit; and
changing the digital marker using the received input information.

14. The method according to claim 12 or 13, further comprising:
receiving input information for changing the digital marker displayed on the image display unit from another terminal via a local area wireless communication; and
changing the digital marker using the received input information.

15. The method according to any of claims 12 to 14, further comprising:
receiving input information for changing the digital marker displayed on the image display unit from a server via a wired/wireless communication network; and
changing the digital marker using the received input information.

16. The method according to any of claims 12 to 15, further comprising:
transmitting a selected digital marker from among digital markers stored in the memory unit and an object corresponding to the selected digital marker to another terminal via a local area wireless communication,
and, preferably, storing the selected digital marker and the object corresponding to the selected digital marker in the memory unit in the other terminal.

17. The method according to any of claims 12 to 16, further comprising:
transmitting a selected digital marker from among digital markers stored in the memory unit and an object corresponding to the selected digital marker to a server via a wired/wireless communication network,
and, preferably, further comprising:
downloading a registered digital marker and an object corresponding to the registered digital marker from the server via the wired/wireless communication network;
and
storing the downloaded registered digital marker and the object corresponding to the downloaded registered digital marker in the memory unit.

18. A method for providing augmented reality, comprising:
photographing a digital marker displayed on an image display unit of another terminal using a camera;
recognizing the photographed digital marker, and loading a first object corresponding to the digital marker from a memory unit;
synthesizing the first object with a real-time video image obtained through the camera;
and
displaying the synthesized first object and real-time video image on an image display unit.

19. The method according to claim 18, further comprising:
transmitting input information to the other terminal using a local area wireless communication technology to change the digital marker displayed on the image display unit of the other terminal;
photographing the changed digital marker displayed on the image display unit of the other terminal according to the input information;
recognizing the changed digital marker, and loading a second object corresponding to the changed digital marker from the memory unit;
synthesizing the second object with a real-time video image obtained through the camera;
and
displaying the synthesized second object and real-time video image on the image display unit.
